# EUROPEAN PATENT SPECIFICATION

(11) **EP 4 067 720 B1**
(45) Date of publication and mention of the grant of the patent: **19.03.2025**
(21) Application number: 20895221.8
(22) Date of filing: 16.09.2020
(51) Int. Cl.: F16L 19/02, F16B 41/00

(54) **AIR CONDITIONING SYSTEM WITH DISASSEMBLY-PREVENTION NUT ASSEMBLY**
KLIMAANLAGE MIT MUTTERANORDNUNG ZUR DEMONTAGEVERHINDERUNG
SYSTÈME DE CLIMATISATION AVEC ENSEMBLE ÉCROU ANTI-DÉMONTAGE

(30) Priority: 04.12.2019 CN 201922150964 U; 04.12.2019 CN 201922153440 U; 04.12.2019 CN 201922150254 U
(43) Date of publication of application: 05.10.2022
(73) Proprietor: Zhejiang Dunan Artificial Environment Co., Ltd., Shaoxing Zhejiang 311835 (CN)
(72) Inventor: LOU, Feng, Shaoxing, Zhejiang 311835 (CN); CHEN, Diyong, Shaoxing, Zhejiang 311835 (CN); ZHOU, Feng, Shaoxing, Zhejiang 311835 (CN); FENG, Guanghua, Shaoxing, Zhejiang 311835 (CN); GAO, Wansheng, Shaoxing, Zhejiang 311835 (CN); TAN, Zhenyu, Shaoxing, Zhejiang 311835 (CN)
(74) Representative: Meyer-Dulheuer MD Legal Patentanwälte PartG mbB
(86) International application number: PCT/CN2020/115439
(87) International publication number: WO 2021/109674

(56) References cited:
- CN-A- 103 363 208
- CN-A- 107 906 279
- CN-A- 107 940 132
- CN-A- 108 953 356
- CN-U- 205 560 043
- CN-U- 207 701 977
- CN-Y- 201 014 091
- DE-A1- 102004 013 570
- DE-A1- 102012 218 727
- FR-A1- 2 964 721
- JP-A- 2015 155 726
- KR-A- 20170 124 178

## Description

### CROSS-REFERENCE TO RELATED APPLICATIONS

This application claims all benefits accruing from China Patent Application Nos. 201922150254.2, filed on December 04, 2019, 201922150964.5, filed on December 04, 2019, and 201922153440.1, filed on December 04, 2019, in the China National Intellectual Property Administration.

### TECHNICAL FIELD

The present invention relates to refrigeration equipment, in particular to a disassembly-prevention nut assembly and an air conditioning system.

### BACKGROUND

At present, in a structure used for connecting a connection pipe on an indoor side of an air conditioning system using a flammable refrigerant, a pipe connector and a connection pipe is able to be fixed with a connection nut. An end of the connection pipe is installed in the connection nut. During installation, the connection nut is rotated and tightly connected to the pipe connector by applying a locking torque to the connection nut, so that the connection pipe can be locked to the pipe connector. The pipe connector can be removed from the connection pipe if the connection nut is rotated backwards, which cannot meet an installation requirement of the indoor side of the air conditioning system using the flammable refrigerant. German patent No. DE102012218727 A1 discloses a pipe connection for conducting a fluid that is under pressure, including two tubular connection parts for a conical clamping connection, which are screwed together by a union nut while one is inserted in the other. Each connection part has a conical sealing surface that contacts the other in a sealing manner and wherein an annular groove is provided in one of the sealing surfaces. In order to enable the pipe connection also to conduct a fluid having cycling or varying temperature, according to the invention the inner of the two connection parts has thermal insulation, preferably in the form of a thermal insulation tube, on the inside of the pipe at least in the axial segment of the sealing surface of said connection part, wherein the thermal insulation tube has a cam or a collar on the outer surface, which engages in a recess, which is axially bounded by the two connection parts. French patent No. FR2964721A1 discloses a device has a screwing and fixing module for screwing and fixing a valve/hose assembly on a thread. A protective element is screwed on the module in counterclockwise direction in a working place by an installer. The module includes a support permitting screwing of a ring that has a function to prohibit public access to a nut of a sealed connector between a gas supply pipe and the valve/hose assembly. The protective element includes a bore having diameter higher than that of sides on slaughtered corners of the nut.

### SUMMARY

According to various embodiments of the present invention, the present invention provides a disassembly-prevention nut assembly for fixing a first connection pipe and a second connection pipe. The disassembly-prevention nut assembly includes a pipe connector, a connection nut and a disassembly-prevention nut. A first end of the connection nut is fixed to the first connection pipe, the pipe connector is sleeved on and fixed to the second connection pipe. The pipe connector extends in and is threadedly connected to a second end of the connection nut. The disassembly-prevention nut is sleeved on and threadedly connected to the pipe connector or the connection nut.

The disassembly-prevention nut assembly as described above has the following advantages.

By mounting the disassembly-prevention nut on the connection nut or the pipe connector, the connection nut can be anti-disassembly connected to the pipe connector, so that the first connection pipe can be anti-disassembly connected to the second connection pipe.

In an embodiment, the disassembly-prevention nut is sleeved on the connection nut and threadedly connected to the second end relatively away from the first connection pipe of the connection nut. An inner screw thread being capable of connecting with the pipe connector is defined on an inner surface of the connection nut, and an outer screw thread being capable of connecting with the disassembly-prevention nut is defined on an outer surface of the connection nut, and a spiral direction of the inner screw thread of the connection nut is opposite to that of the outer screw thread of the connection nut.

In an embodiment, a connection length between the disassembly-prevention nut and the connection nut is shorter than that between the connection nut and the pipe connector.

In an embodiment, an outer surface of the connection nut includes a thread portion and a smooth portion, and the disassembly-prevention nut is threadedly connected with the third thread portion. The pipe connector includes an assembling portion having a non-circular-shaped outer surface, and the disassembly-prevention nut is an outer hexagon-shaped nut.

The following embodiment concerned does not form part of the claimed invention. In an embodiment, the disassembly-prevention nut is sleeved on and threadedly connected to the pipe connector.

The following embodiment concerned does not form part of the claimed invention. In an embodiment, a first thread portion is defined on a first end relatively close to the first connection pipe of the pipe connector, and the first thread portion is capable of threadedly connecting with the connection nut. A second thread portion is defined on a second end of the pipe connector, the second thread portion is capable of threadedly connecting with the disassembly-prevention nut, and a spiral direction of the first thread portion is opposite to that of the second thread portion.

The following embodiment concerned does not form part of the claimed invention. In an embodiment, a first thread portion is defined on a first end relatively close to the first connection pipe of the pipe connector, and the first thread portion is capable of threadedly connecting with the connection nut. A second thread portion is defined on a second end relatively away from the first connection pipe of the pipe connector, the second thread portion is capable of threadedly connecting with the disassembly-prevention nut, and a spiral direction of the first thread portion is the same with that of the second thread portion.

The following embodiment concerned does not form part of the claimed invention. In an embodiment, a limiting portion is defined on the second end of the pipe connector extending along an axial direction of the pipe connector, and the limiting portion abuts against the disassembly-prevention nut.

The following embodiment concerned does not form part of the claimed invention. In an embodiment, a connection length between the disassembly-prevention nut and the pipe connector is shorter than that between the connection nut and the pipe connector.

The following embodiment concerned does not form part of the claimed invention. In an embodiment, the connection nut includes a twisting portion having a non-circular shaped outer surface, and the disassembly-prevention nut is an outer hexagon-shaped nut.

The following embodiment concerned does not form part of the claimed invention. In an embodiment, a screw thread disposed on an inner surface of the disassembly-prevention nut (30) extends to both ends of the disassembly-prevention nut.

The screw thread disposed on the inner surface of the disassembly-prevention nut extends to one end of the disassembly-prevention nut.

The present invention further provides an air conditioning system, including a first connection pipe, a second connection pipe and the disassembly-prevention nut assembly as described above.

In an embodiment, the first connection pipe is connected to the pipe connector by welding, and the second connection pipe abuts against and is fixed in the connection nut via the pipe connector.

### BRIEF DESCRIPTION OF THE DRAWINGS

In order to better describe and explain the embodiments and/or examples of those inventions disclosed herein, one or more drawings may be referred to. The additional details or examples used to describe the drawings should not be considered as limiting the scope of any of the disclosed inventions, the currently described embodiments and/or examples, and the best mode of these inventions currently understood.
FIG. 1 is a structural schematic diagram of connection between a disassembly-prevention nut assembly, a first connection pipe, and or a second connection pipe in an embodiment of the present invention.
FIG. 2 is a structural schematic diagram of a connection nut and a disassembly-prevention nut of the disassembly-prevention nut assembly in FIG. 1.
FIG. 3 is a section view of a disassembly-prevention nut and a connection nut in a tightened state of the disassembly-prevention nut assembly in FIG. 1.
FIG. 4 is a section view of the disassembly-prevention nut and the connection nut in an untightened state of the disassembly-prevention nut assembly in FIG. 3.
FIG. 5 is a structural schematic diagram of connection between a disassembly-prevention nut assembly, a first connection pipe, and a second connection pipe in an embodiment of the present invention, the embodiment concerned does not form part of the claimed invention.
FIG. 6 is a structural schematic diagram of a pipe connector of the disassembly-prevention nut assembly in FIG. 5, the embodiment concerned does not form part of the claimed invention.
FIG. 7 is a structural schematic diagram of a disassembly-prevention nut and a pipe connector in an untightened state of the disassembly-prevention nut assembly in FIG. 5, the embodiment concerned does not form part of the claimed invention.
FIG. 8 is a section view of the disassembly-prevention nut assembly in FIG. 5, the embodiment concerned does not form part of the claimed invention.
FIG. 9 is a section view of the disassembly-prevention nut assembly in FIG. 7, the embodiment concerned does not form part of the claimed invention.
FIG. 10 is a structural schematic diagram of combination between a disassembly-prevention nut assembly, a first connection pipe, and a second connection pipe in an embodiment, the embodiment concerned does not form part of the claimed invention.
FIG. 11 is a structural schematic diagram of a pipe connector of the disassembly-prevention nut assembly in FIG. 10, the embodiment concerned does not form part of the claimed invention.
FIG. 12 is a section view of combination between a disassembly-prevention nut assembly, a first connection pipe, and a second connection pipe in FIG. 10, the embodiment concerned does not form part of the claimed invention.

In the figures, 100 represents a disassembly-prevention nut assembly; 10 represents a pipe connector; 11 represents an assembling portion; 12 represents an abutting portion; 13 represents a first thread portion; 14/14a represents a second thread portion; 15/15a represents a limiting portion; 20 represents a connection nut; 21 represents a third thread portion; 22 represents a smooth portion; 23 represents a twisting portion; 30 represents a disassembly-prevention nut; 201 represents a first connection pipe; 2011 represents an expansion portion; 202 represents a second connection pipe.

### DETAILED DESCRIPTION

A disassembly-prevention nut assembly and an air conditioning system provided in the present invention are further described below.

The present invention provides a disassembly-prevention nut assembly 100, which is installed in an indoor unit of an air conditioner to prevent accidental disassembly of refrigerant connection pipes.

Of course, the disassembly-prevention nut assembly 100 mentioned above can also be used in other devices that need to be installed with anti-disassembly structures, such as refrigerators.

At present, an air conditioning system using a flammable refrigerant is widely used. In national indoor installation standard of air conditioning system, refrigerant pipes should be non-detachably installed, so as to prevent users from disassembling the refrigerant pipe and avoid safety hazards. In order to further optimize the refrigerant pipe system of the air conditioning system using a flammable refrigerant and realize the non-detachably connection between the refrigerant pipes, the disassembly-prevention nut assembly 100 further includes a disassembly-prevention nut 30, so that a pipe connector 10 is non-detachably connected to a connection nut 20.

The disassembly-prevention nut assembly 100 includes a pipe connector 10, a connection nut 20 and a disassembly-prevention nut 30. The pipe connector 10 is configured for threadedly connected with the connection nut 20, while fixing the first connection pipe 201 in the connection nut 20. The connection nut 20 is configured to connect with the pipe connector 10, and the disassembly-prevention nut 30 is configured to further tighten connection between the pipe connector 10 and the connection nut 20 and prevent the pipe connector 10 and the connection nut 20 from disassembling.

The disassembly-prevention nut assembly 100 is described by the following three embodiments.

### Embodiment 1

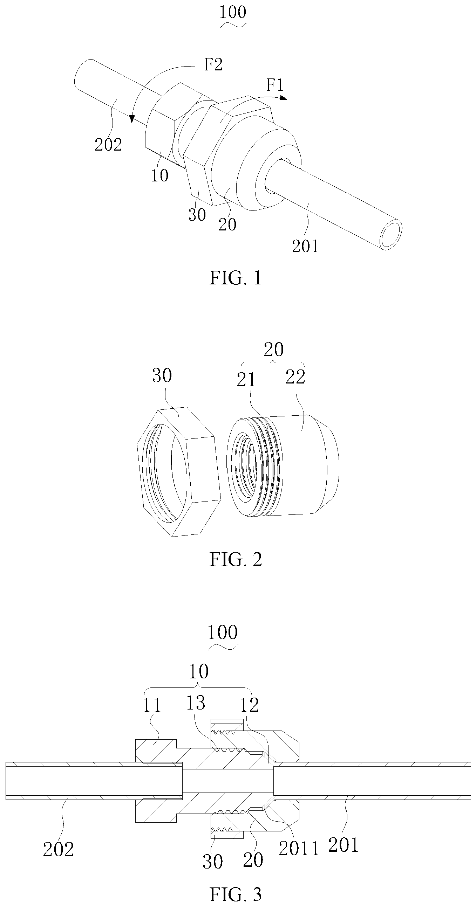

Referring to FIG. 1, FIG. 1 is a structural schematic diagram of connection between a disassembly-prevention nut assembly 100, a first connection pipe 201 and a second connection pipe 202 in an embodiment of the present disclosure.

A first end of the connection nut 20 is sleeved on and fixed to the first connection pipe 201, and a second end of the connection nut 20 is threadedly connected to the pipe connector 10. The first connection pipe 201 is inserted in the connection nut 20 and abuts against the pipe connector 10. Upon a condition that the pipe connector 10 is threadedly connected with the connection nut 20 to a maximum extent, the pipe connector 10 abuts against the first connection pipe 201. The disassembly-prevention nut 30 is threadedly connected to the second end relatively away from the first connection pipe 201 of the connection nut 20, and the second connection pipe 202 is inserted in and fixed to an end of the pipe connector 10 away from the first connection pipe 201.

Upon a condition that the disassembly-prevention nut 30 is screwed to the connection nut 20, the connection between the pipe connector 10 and the connection nut 20 can hardly be removed directly by an ordinary user of the air conditioner, so that the pipes of the indoor unit of the air conditioner cannot be disassembled.

The pipe connector 10 is approximately cylinder-shaped, one end of the pipe connector 10 away from the first connection pipe 201 extends radially and forms an assembling portion 11, and the other end of the pipe connector 10 contracts radially and forms an abutting portion 12. An outer surface close to the abutting portion 12 of the pipe connector 10 is provided with a first thread portion 13. The assembling portion 11 is configured for screwing the pipe connector 10 to the connection nut 20 using a tool, the abutting portion 12 is configured for abutting against the first connection pipe 201, and the first thread portion 13 is configured to threadedly connect with the connection nut 20.

The second connection pipe 202 is inserted and fixed in the assembling portion 11 by methods of welding, riveting and the like, so as to ensure the sealing between the second connection pipe 202 and the assembling portion 11.

In an embodiment, in order to facilitate a tool to screw the pipe connector 10 into the connection nut 20, the assembling portion 11 can be substantially an outer hexagon-shaped prism.

It is understood that in other embodiment, the shape of the assembling portion 11 can be in other non-circular structures, such as triangle-shaped prisms, as long as it can facilitate a tool to screw the pipe connector 10 into the connection nut 20.

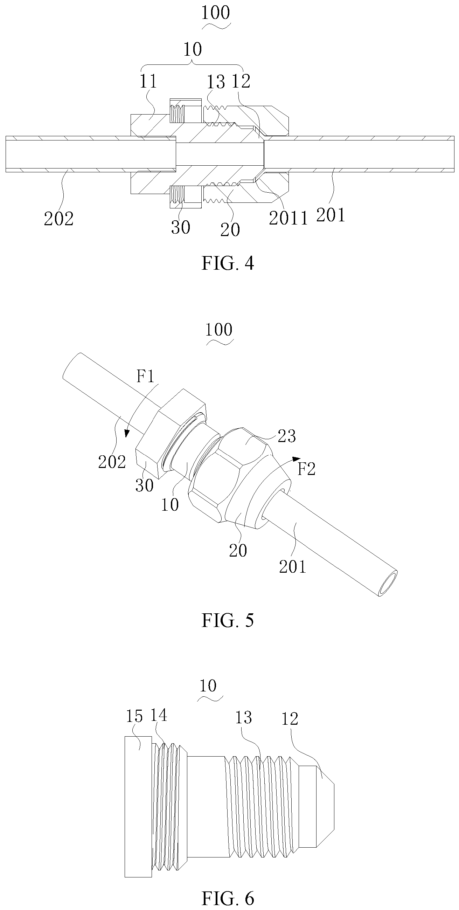

Referring to FIG. 2 to FIG. 4, FIG. 2 is a structural schematic diagram of a connection nut and a disassembly-prevention nut of the disassembly-prevention nut assembly in FIG. 1. FIG. 3 is a section view of a disassembly-prevention nut and a connection nut in a tightened state of the disassembly-prevention nut assembly in FIG. 1. FIG. 4 is a section view of the disassembly-prevention nut and the connection nut in an untightened state of the disassembly-prevention nut assembly in FIG. 3.

The connection nut 20 is substantially a cylinder-shaped nut with threads configured to connect with the pipe connector 10 on an inner surface of the connection nut 20. An end extending into the connection nut 20 of the first connection pipe 201 is defined as an expansion portion 2011. The expansion portion 2011 is configured to prevent the first connection pipe 201 from pulling out the connection nut 20 directly. Accordingly, the connection nut 20 is provided with a housing cavity that is capable of accommodating the first connection pipe 201, and the housing cavity is provided with a shrinkage port structure to prevent the first connection pipe 201 from detaching. An outer surface of the expansion portion 2011 is attached to the inner wall of the shrinkage port. Correspondingly, a shrinkage shape of the abutting portion 12 of the pipe connector 10 is also set corresponding to the expansion portion 2011 of the first connection pipe 201, so as to ensure that the abutting portion 12 can closely contact with and seal the first connection pipe 201.

Upon a condition that the pipe connector 10 is threadedly connected with the connection nut 20 to a maximum extent via the first thread portion 13, the abutting portion 12 of the pipe connector 10 abuts against an inner surface of the expansion portion 2011 of the first connection pipe 201, so that the first connection pipe 201 is sealed and fixed to a position between the pipe connector 10 and the connection nut 20.

The disassembly-prevention nut 30 is an outer hexagon-shaped nut, which is sleeved on a second end relatively away from the first connection pipe 201 of the connection nut 20. Correspondingly, an outer surface of the connection nut 20 includes a third thread portion 21, and the third thread portion 21 is configured for threadedly connecting with the disassembly-prevention nut 30. The connection nut 20 is further provided with a smooth portion 22 connected to the third thread portion 21, and a dimension of the smooth portion 22 equals to that of the third thread portion 21. The smooth portion 22 is configured to prevent the disassembly-prevention nut 30 from being screwed out of the connection nut 20 directly. The disassembly-prevention nut 30 is arranged between the pipe connector 10 and the connection nut 20, and the inner dimension of the disassembly-prevention nut 30 is smaller than the outer dimension of the assembling portion 11, making the disassembly-prevention nut 30 not easily to be lost during installation, and facilitating direct installation of the connection by the installer.

Upon a condition that the disassembly-prevention nut 30 is threadedly connected with the third thread portion 21 to a maximum extent, the disassembly-prevention nut 30 is further screwed until surfaces of an inner screw thread of the disassembly-prevention nut 30 and the third thread portion 21 produce screw loose. At this time, it is difficult for the disassembly-prevention nut 30 to be screwed in or out by a tool, and the connection nut 20 cannot be further screwed in or out, thus further ensuring a non-detachably connection between the disassembly-prevention nut 30 and the connection nut 20.

The disassembly-prevention nut 30 in the present embodiment is an outer hexagon-shaped nut. In this way, on the one hand, it is easier and saves effort for the installer to rotate the disassembly-prevention nut 30, and on the other hand, the disassembly-prevention nut 30 can be used with various existing wrench tools, increasing the range of wrench tools to choose.

It is understood that in other embodiments, the disassembly-prevention nut 30 may also be in other shapes, such as a pentagon-shaped nut, as long as the disassembly-prevention nut 30 can be easily connected to the connection nut 20. The connection nut 20 may further be in other structures to prevent the disassembly-prevention nut 30 from being directly screwed out of the connection nut 20. For example, by providing a limiting portion on the outer surface of the connection nut 20, as long as the structure can prevent the disassembly-prevention nut 30 from being screwed out directly of the connection nut 20.

In an embodiment, hardness of the disassembly-prevention nut 30 is lower than hardness of the pipe connector 10 or the connection nut 20. In this way, upon a condition that screw loose is generated between the surfaces of the disassembly-prevention nut 30 and the connection nut 20, an inner screw thread of the disassembly-prevention nut 30 are damaged, while neither the pipe connector 10 nor the connection nut 20 is damaged.

In an embodiment, an outer screw thread being capable of connecting with the disassembly-prevention nut 30 is defined on an outer surface of the connection nut 20, and an inner screw thread being capable of connecting with the pipe connector 10 is defined on an inner surface of the connection nut 20. A spiral direction of the inner screw thread of the connection nut 20 is opposite to that of the outer screw thread of the connection nut 20. That is, a direction of the disassembly-prevention nut 30 screwed into the connection nut 20 is opposite to a direction of the connection nut 20 screwed into the pipe connector 10. In this way, the disassembly-prevention nut 30 can further drive the connection nut 20 to screw into the pipe connector 10 while being tightened, and prevent the connection nut 20 from being screwed out of the pipe connector 10. Specifically, the inner screw thread on the inner surface of the connection nut 20 can be a right-hand thread and the outer screw thread on the outer surface of the connection nut 20 can be a left-hand thread on the contrary. A direction F1 in which the installer screws the disassembly-prevention nut 30 into the connection nut 20 and a direction F2 in which the pipe connector 10 is screwed into the connection nut 20 are shown in FIG. 1, respectively. However, upon a condition that the installer fixes the connection nut 20 and screw the pipe connector 10 into the connection nut 20 with the tool, the direction in which the pipe connector 10 screwed into the connection nut 20 is opposite to the direction of F2 in the FIG.1.

In an embodiment, in order to ensure threaded connection strength between the disassembly-prevention nut 30 and the connection nut 20 smaller than threaded connection strength between the connection nut 20 and the pipe connector 10, a biting depth between the connection nut 20 and the pipe connector 10 is deeper than that between the disassembly-prevention nut 30 and the connection nut 10. Therefore, a force of the pipe connector 10 screwed into the connection nut 20 is greater than a force of the disassembly-prevention nut 30 screwed into the connection nut 20. In this way, upon a condition that screw loose is generated between surfaces of the inner screw thread of the disassembly-prevention nut 30 and the third thread portion 21, screw loose is hardly generated between the connection nut 20 and the pipe connector 10.

In an embodiment, upon a condition that screw loose is generated between surfaces of the inner screw thread of the disassembly-prevention nut 30 and the third thread portion 21, in order to prevent the first connection pipe 201 from being damaged by a pressing force between the pipe connector 10 and the connection nut 20 caused by a locking force of the disassembly-prevention nut 30, a connection length between the connection nut 20 and the pipe connector 10 is longer than that between the disassembly-prevention nut 30 and the connection nut 20. In an embodiment, the number of screw threads between the connection nut 20 and pipe connector 10 is greater than that between the disassembly-prevention nut 30 and the connection nut 20.

In an embodiment, the inner screw thread disposed on an inner surface of the disassembly-prevention nut 30 extends between both ends of the disassembly-prevention nut 30, so that the connection strength between the disassembly-prevention nut 30 and the connection nut 20 is greater.

In an embodiment, the inner screw thread disposed on the inner surface of the disassembly-prevention nut 30 extends to one end of the disassembly-prevention nut 30, so that the processing of the disassembly-prevention nut 30 is convenient and time-saving, and the processing cost is reduced.

A process of fixing the disassembly-prevention nut assembly 100 to the first connection pipe 201 or the second connection pipe 202 is shown hereinafter.

Referring to FIG. 3 and FIG. 4, during installation, firstly, an end of the first connection pipe 201 with the expansion portion 2011 is inserted into the connection nut 20, and extends out from a first end of the connection nut 20, and the pipe connector 10 is screwed into the second end of the connection nut 20 along the direction F2 with a wrench to fix the pipe connector 10. Then the pipe connector 10 is tightened and abuts against the expansion portion 2011 of the first connection pipe 201, so that a wall of the expansion portion 2011 is clamped between the pipe connector 10 and the connection nut 20. The disassembly-prevention nut 30 is screwed along the direction F1, and drives the pipe connector 10 further screw into the connection nut 20, so that the first connection pipe 201 can be further compressed. After the first connection pipe 201 is compressed, the disassembly-prevention nut 30 is further screwed along the direction F1. At this time, since the threaded connection strength between the disassembly-prevention nut 30 and the connection nut 20 is smaller than the threaded connection strength between the connection nut 20 and the pipe connector 10, screw loose is generated between the disassembly-prevention nut 30 and the connection nut 20. That is, the inner thread of the disassembly-prevention nut 30 and the outer thread of the third thread portion 21 cannot be engaged. At this time, whether the disassembly-prevention nut 30 is screwed in or out of the connection nut 20, the connection nut 20 does not rotate. In addition, since the outer surface of the smooth portion 22 is a smooth surface, it is impossible to rotate the connection nut 20 by other tools and loosen the connection nut 20. Therefore, the requirement that the connection nut 20 is disassembled is achieved, preventing the leakage of refrigerant caused by manual disassembly.

### Embodiment 2

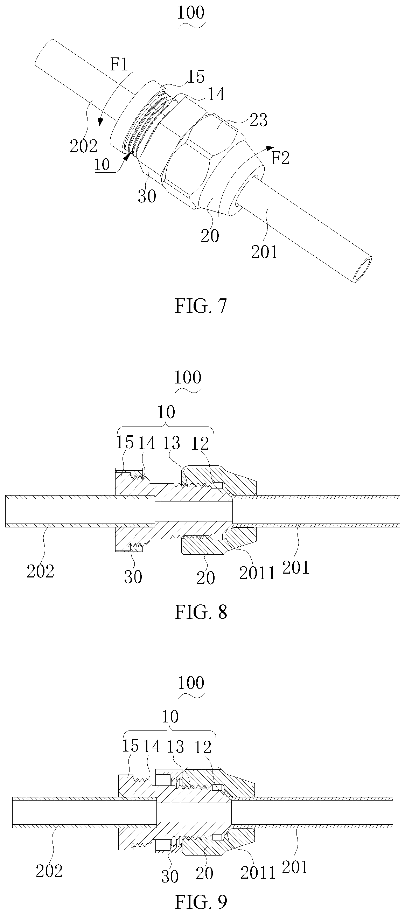

The following embodiment concerned does not form part of the claimed invention. Referring to FIG. 5 to FIG. 7, FIG. 5 is a structural schematic diagram of connection between a disassembly-prevention nut assembly 100, a first connection pipe 201, and a second connection pipe 202 in an embodiment of the present invention. FIG. 6 is a structural schematic diagram of a pipe connector 10 of the disassembly-prevention nut assembly 100 in FIG. 5. FIG. 7 is a structural schematic diagram of a disassembly-prevention nut 30 and a pipe connector 10 in an untightened state of the disassembly-prevention nut assembly 100 in FIG. 5.

The first connection pipe 201 is inserted in a first end of the connection nut 20, and a second end of the connection nut 20 is threadedly connected the pipe connector 10. The first connection pipe 201 is inserted in the connection nut 20 and abuts against the pipe connector 10. Upon a condition that the pipe connector 10 is threadedly connected with the connection nut 20 to a maximum extent, the pipe connector 10 abuts against the first connection pipe 201. The disassembly-prevention nut 30 is threadedly connected to the pipe connector 10, and the second connection pipe 202 is inserted in and fixed to a second end of the pipe connector 10 away from the first connection pipe 201.

Upon a condition that the disassembly-prevention nut 30 is screwed to the pipe connector 10, the connection between the pipe connector 10 and the connection nut 20 cannot be removed directly by the ordinary user of the air conditioner, thus achieving the purpose of making the pipes of the indoor unit of the air conditioner unable to be disassembled.

The pipe connector 10 is approximately cylinder-shaped, the second end of the pipe connector 10 away from the first connection pipe 201 is threadedly connected with the disassembly-prevention nut 30, and the first end of the pipe connector 10 contracts along a radial direction of a cross section of the pipe connector 10 and forms an abutting portion 12. The abutting portion 12 is configured to abut against the first connection pipe 201, and a thread portion is configured for threadedly connecting with the connection nut 20. The first thread portion 13 is defined on an outer surface relatively close to the first connection pipe 201 of the pipe connector 10, the first thread portion 13 is capable of threadedly connecting with the connection nut 20, and the first thread portion 13 is relatively close to the abutting portion 12.

The second connection pipe 202 is inserted in and fixed to the pipe connector 10 by methods of welding, riveting and the like, so as to ensure sealing between the second connection pipe 202 and the pipe connector 10.

Furthermore, an outer side of the pipe connector 10 further includes an exposed smooth curved portion (not labeled), so that the user cannot directly remove the pipe connector 10 with ordinary tools after the disassembly-prevention nut 30 is connected to the connection nut 20.

The connection nut 20 is substantially cylinder-shaped, and an inner surface of the connection nut 20 is provided with a thread for connecting with the pipe connector 10. An expansion portion 2011 is defined on an end connecting to the connection nut 20 of the first connection pipe 201. The expansion portion 2011 is configured to prevent the first connection pipe 201 from being pulled out of the connection nut 20 directly. Accordingly, the connection nut 20 is provided with a housing cavity that is capable of accommodating the first connection pipe 201, and the housing cavity is provided with a shrinkage port structure to prevent the first connection pipe 201 from detaching. The outer surface of the expansion portion 2011 is attached to the inner wall of the shrinkage port. Correspondingly, the shrinkage shape of the abutting portion 12 of the pipe connector 10 is also set corresponding to the expansion portion 2011 of the first connection pipe 201, so as to ensure that the abutting portion 12 can closely contact and seal with the first connection pipe 201.

Upon a condition that the pipe connector 10 is threadedly connected with the connection nut 20 to a maximum extent via the first thread portion 13, the abutting portion 12 of the pipe connector 10 abuts against the inner wall of the expansion portion 2011 of the first connection pipe 201, so that the first connection pipe 201 is sealed and fixed to a position between the pipe connector 10 and the connection nut 20.

The connection nut 20 is provided with a twisting portion 23 for the user to screw the connection nut 20 to the pipe connector 10 with a tool.

In an embodiment, in order to facilitate screwing the pipe connector 10 into the connection nut 20 with a tool, the twisting portion 23 is substantially an outer hexagon-shaped prism.

It could be understood that in other embodiment, the shape of the twisting portion 23 can be in other non-circular structures, such as triangle-shaped prisms, as long as it can facilitate screwing the pipe connector 10 into the connection nut 20 with a tool.

Referring to FIG. 8 to FIG. 9, FIG. 8 is a section view of the disassembly-prevention nut assembly 100 in FIG. 5. FIG. 9 is a section view of the disassembly-prevention nut assembly 100 in FIG. 7.

In an embodiment, the disassembly-prevention nut 30 is an outer hexagon-shaped nut, which is sleeved on the pipe connector 10. Correspondingly, a second thread portion 14 is defined on an outer surface relatively away from the first connection pipe 201 of the pipe connector 1, and the second thread portion 14 is capable of threadedly connecting with the disassembly-prevention nut 30.

The disassembly-prevention nut 30 in the present embodiment is an outer hexagon-shaped nut. In this way, on the one hand, it is easier and saves effort for the installer to rotate the disassembly-prevention nut 30, and on the other hand, the disassembly-prevention nut 30 can be used with various existing wrench tools, increasing the range of wrench tools to choose.

In an embodiment, a limiting portion 15 is defined on a first end away from the first connection pipe 201 of the pipe connector 10 extending along an axial direction of the pipe connector 10, and the limiting portion 15 is configured to abut against the disassembly-prevention nut 30. The disassembly-prevention nut 30 is sleeved on and threadedly connected to the pipe connector 10, and the inside dimension of the disassembly-prevention nut 30 is smaller than the outside dimension of the limiting portion 15, making the disassembly-prevention nut 30 easy for the installer to install directly with tools.

In one embodiment, a second thread portion 14 is provided between the limiting portion 15 of the pipe connector 10 and the first thread portion 13 of the pipe connector 10, and the second thread portion 14 is configured for connecting with the disassembly-prevention nut 30. In this way, the disassembly-prevention nut 30 and the connection nut 20 are installed on the same side of the pipe connector 10, and the inner dimension of the disassembly-prevention nut 30 is smaller than the outer dimension of the twisting portion 23 of the connection nut 20, so that it is not easy for the disassembly-prevention nut 30 to lose during installation, and easy for the installer to install directly.

Preferably, a dimension of the second thread portion 14 is larger than that of the first thread portion 13.

In one embodiment, a spiral direction of the first thread portion 13 is opposite to that of the second thread portion 14. That is, a direction of the disassembly-prevention nut 30 screwed into the pipe connector 10 is opposite to a direction of the connection nut 20 screwed into the pipe connector 10. In this way, the disassembly-prevention nut 30 can drive the pipe connector 10 to screw into the connection nut 20 while being tightened. Specifically, the first thread portion 13 can be set as a right-hand thread and the second thread portion 14 can be set as a left-hand thread on the contrary. The disassembly-prevention nut 30 is screwed into the pipe connector 10 in a direction F1, and the connection nut 20 is screwed into the pipe connector 10 in a direction F2.

In one embodiment, upon a condition that the disassembly-prevention nut 30 is threadedly connected with the second thread portion 14 of the pipe connector 10 and abuts against the limiting portion 15, the disassembly-prevention nut 30 is further screwed until screw loose is generated between surfaces of an inner screw thread of the disassembly-prevention nut 30 and the second thread portion 14. At this time, it is difficult for the disassembly-prevention nut 30 to be screwed in or out by the tool, and the connection nut 20 cannot be further screwed in or out, thus further ensuring a non-detachably connection between the disassembly-prevention nut 30 and the pipe connector 10.

It is understood that in other embodiments, the disassembly-prevention nut 30 may also be in other shapes, such as a pentagon-shaped nut, as long as the disassembly-prevention nut 30 can be easily connected to the pipe connector 10. The spiral directions of the first thread portion 13 and the second thread portion 14 can also be interchanged, as long as the disassembly-prevention nut 30 can drive the pipe connector 10 to be screwed into the connection nut 20 while screwing into the pipe connector 10.

In an embodiment, hardness of the disassembly-prevention nut 30 is lower than hardness of the pipe connector 10 and the connection nut 20. In this way, upon a condition that screw loose is generated between the surfaces of the disassembly-prevention nut 30 and the pipe connector 10, an inner screw thread of the disassembly-prevention nut 30 are damaged, while neither the first thread portion 13 of the pipe connector 10 nor the connection nut 20 is damaged.

In an embodiment, in order to ensure threaded connection strength between the disassembly-prevention nut 30 and the pipe connector 10 smaller than threaded connection strength between the connection nut 20 and the pipe connector 10, a biting depth of a threaded connection between the connection nut 20 and the pipe connector 10 is deeper than a biting depth of a threaded connection between the disassembly-prevention nut 30 and the pipe connector 10. Therefore, a force of the pipe connector 10 screwed into the connection nut 20 is greater than a force of the disassembly-prevention nut 30 screwed into the connection nut 20. In some embodiments, a connection length between the connection nut 20 and the pipe connector 10 is longer than that between the disassembly-prevention nut 30 and the pipe connector 10. In this way, upon a condition that the disassembly-prevention nut 30 is tightly tightened and abuts against the limiting portion 15, the connection between the connection nut 20 and the pipe connector 10 is tight, but screw loose is hardly generated between the connection nut 20 and the pipe connector 10.

In an embodiment, the inner screw thread disposed on an inner surface of the disassembly-prevention nut 30 extends to both ends of the disassembly-prevention nut 30, so that the connection strength between the disassembly-prevention nut 30 and the pipe connector 10 is greater.

In an embodiment, the inner screw thread disposed on the inner surface of the disassembly-prevention nut 30 extends to one end of the disassembly-prevention nut 30, so that the processing of the disassembly-prevention nut 30 is convenient and time-saving, and the processing cost is reduced.

A process of fixing the disassembly-prevention nut assembly 100 to the first connection pipe 201 or the second connection pipe 202 is shown hereinafter.

Referring to FIG. 5 to FIG. 9, during installation, firstly, an end of the first connection pipe 201 with the expansion portion 2011 is inserted into the connection nut 20, and extends from a first end of the connection nut 20. The disassembly-prevention nut 30 is sleeved on the pipe connector 10, and the connection nut 20 is screwed into the first thread portion 13 of the pipe connector 10 along the direction F2 with a wrench to fix the connection nut 20. Then the connection nut 20 is screwed and tightened, and the pipe connector 10 abuts against the expansion portion 2011 of the first connection pipe 201, so that a wall of the expansion portion 2011 is clamped between the pipe connector 10 and the connection nut 20. The disassembly-prevention nut 30 is screwed along the direction F1, and drives the pipe connector 10 to screw into the connection nut 20, so that the first connection pipe 201 is further compressed. After the first connection pipe 201 is compressed, the disassembly-prevention nut 30 is further screwed along a locking direction until the disassembly-prevention nut 30 abuts against the limiting portion 15. At this time, since the threaded connection strength between the disassembly-prevention nut 30 and the pipe connector 10 is smaller than the threaded connection strength between the connection nut 20 and the pipe connector 10, screw loose is generated between the disassembly-prevention nut 30 and the pipe connector 10. That is, the inner thread of the disassembly-prevention nut 30 and the first thread portion 13 cannot be engaged. At this time, whether the disassembly-prevention nut 30 is screwed in or out of the pipe connector 10, the pipe connector 10 does not rotate. In addition, since the outer circumference of the pipe connector 10 is a smooth surface, it is impossible to rotate the pipe connector 10 by other tools and loosen the pipe connector 10. Therefore, the pipe connector 10 and the connection nut 20 can be non-detachably connected. The disassembly-prevention nut assembly 100 can be used in an air conditioning system to prevent leakage of refrigerant from the indoor unit of the air conditioning system, thus avoiding the safety hazards caused by the air conditioning system.

### Embodiment 3

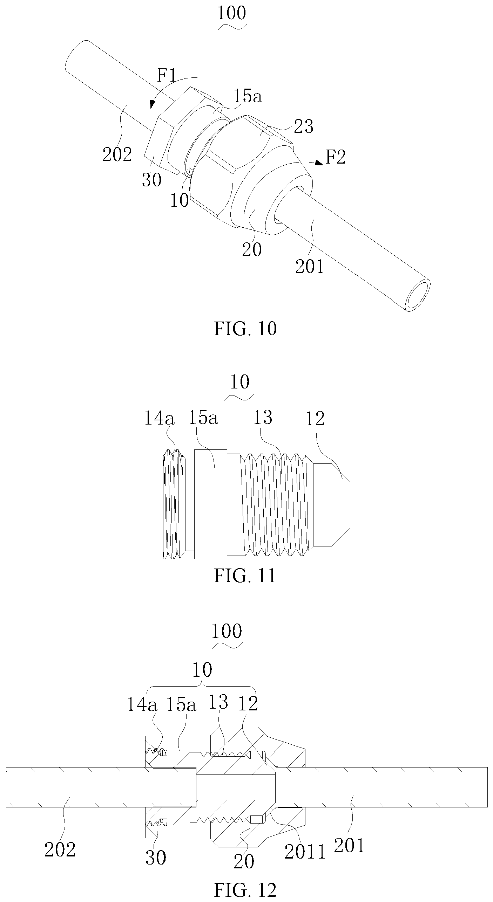

The following embodiment concerned does not form part of the claimed invention. Referring to FIG. 10 and FIG. 11, FIG. 10 is a structural schematic diagram of combination between a disassembly-prevention nut assembly 100, a first connection pipe 201, and a second connection pipe 202 in an embodiment. FIG. 11 is a structural schematic diagram of a pipe connector 10 of the disassembly-prevention nut assembly 100 in FIG. 10.

The first connection pipe 201 is inserted in a first end of the connection nut 20, and a second end of the connection nut 20 is threadedly connected the pipe connector 10. The first connection pipe 201 is inserted in and abuts against the connection nut 20 via the pipe connector 10. Upon a condition that the pipe connector 10 is threadedly connected with the connection nut 20 to a maximum extent, the pipe connector 10 abuts against the first connection pipe 201. The disassembly-prevention nut 30 is threadedly connected to a second end relatively away from the first connection pipe 201 of the pipe connector 10, and the second connection pipe 202 is inserted in and fixed to the second end of the pipe connector 10 away from the first connection pipe 201.

Upon a condition that the disassembly-prevention nut 30 is screwed to the pipe connector 10, the connection between the pipe connector 10 and the connection nut 20 cannot be removed directly by the ordinary user of the air conditioner, so that the pipes of the indoor unit of the air conditioner cannot be disassembled.

The pipe connector 10 is approximately cylinder-shaped, the second end away from the first connection pipe 201 of the pipe connector 10 is threadedly connected with the disassembly-prevention nut 30, and the first end of the pipe connector 10 contracts along a radial direction of a cross section of the pipe connector 10 and forms an abutting portion 12. The abutting portion 12 is configured to abut against the first connection pipe 201, and a thread portion is configured for threadedly connecting with the connection nut 20. The first thread portion 13 is defined on an outer surface relatively close to the first connection pipe 201 of the pipe connector 10, the first thread portion 13 is capable of threadedly connecting with the connection nut 20, and the first thread portion 13 is relatively close to the abutting portion 12.

The second connection pipe 202 is inserted in and fixed to the pipe connector 10 by methods of welding, riveting and the like, so as to ensure sealing between the second connection pipe 202 and the pipe connector 10.

Furthermore, an outer side of the pipe connector 10 further includes an exposed smooth curved portion (not labeled), so that the user cannot directly remove the pipe connector 10 with ordinary tools after the disassembly-prevention nut 30 is connected to the connection nut 20.

Referring to FIG. 12, combination between a disassembly-prevention nut assembly 100 and a first connection pipe 201 or a second connection pipe 202 in FIG. 10.

The connection nut 20 is substantially cylinder-shaped, and an inner surface of the connection nut 20 is provided with a thread for connecting with the pipe connector 10. An expansion portion 2011 is defined on an end connecting to the connection nut 20 of the first connection pipe 201. The expansion portion 2011 is configured to prevent the first connection pipe 201 from being pulled out of the connection nut 20 directly. Accordingly, the connection nut 20 is provided with a housing cavity that is capable of accommodating the first connection pipe 201, and the housing cavity is provided with a shrinkage port structure to prevent the first connection pipe 201 from detaching. The outer surface of the expansion portion 2011 is attached to the inner wall of the shrinkage port. Correspondingly, the shrinkage shape of the abutting portion 12 of the pipe connector 10 is also set corresponding to the expansion portion 2011 of the first connection pipe 201, so as to ensure that the abutting portion 12 can closely contact and seal with the first connection pipe 201.

Upon a condition that the pipe connector 10 is threadedly connected with the connection nut 20 to a maximum extent via the first thread portion 13, the abutting portion 12 of the pipe connector 10 abuts against the inner wall of the expansion portion 2011 of the first connection pipe 201, so that the first connection pipe 201 is sealed and fixed to a position between the pipe connector 10 and the connection nut 20.

The connection nut 20 is provided with a twisting portion 23 for the user to screw the connection nut 20 to the pipe connector 10 with a tool.

In an embodiment, in order to facilitate screwing the pipe connector 10 into the connection nut 20 with a tool, the twisting portion 23 is substantially an outer hexagon-shaped prism.

It could be understood that in other embodiment, the shape of the twisting portion 23 can be in other non-circular structures, such as triangle-shaped prisms, as long as it can facilitate screwing the pipe connector 10 into the connection nut 20 with a tool.

In an embodiment, the disassembly-prevention nut 30 is an outer hexagon-shaped nut, which is sleeved on an end relatively away from the first connection pipe 201 of the pipe connector 10. Correspondingly, a second thread portion 14a is defined on an outer surface relatively away from the first connection pipe 201 of the pipe connector 10, and the second thread portion 14a is capable of threadedly connecting with the disassembly-prevention nut 30.

The disassembly-prevention nut 30 in the present embodiment is a hexagon-shaped nut. In this way, on the one hand, it is easier and saves effort for the installer to rotate the disassembly-prevention nut 30, and on the other hand, the disassembly-prevention nut 30 can be used with various existing wrench tools, increasing the range of wrench tools to choose.

In one embodiment, a spiral direction of the first thread portion 13 is the same with that of the second thread portion 14a. That is, a direction of the disassembly-prevention nut 30 screwed into the pipe connector 10 is opposite to a direction of the connection nut 20 screwed into the pipe connector 10. In this way, the disassembly-prevention nut 30 can drive the pipe connector 10 to screw into the connection nut 20 while being tightened. Specifically, both the first thread portion 13 and the second thread portion 14a can be set as a right-hand thread. The disassembly-prevention nut 30 is screwed into the pipe connector 10 in a direction F1, and the connection nut 20 is screwed into the pipe connector 10 in a direction F2.

In an embodiment, a limiting portion 15a extends along an axial direction of the pipe connector 10. The limiting portion 15a is located between the first thread portion 13 and the second thread portion 14a, and configured to abut against the disassembly-prevention nut 30. The disassembly-prevention nut 30 is threadedly connected to an end relatively away from the first connection pipe 201 of the pipe connector 10, and the inside dimension of the disassembly-prevention nut 30 is smaller than the outside dimension of the limiting portion 15a, making the disassembly-prevention nut 30 easy for the installer to install directly with tools.

In one embodiment, upon a condition that the disassembly-prevention nut 30 is threadedly connected with the second thread portion 14a of the pipe connector 10 and abuts against the limiting portion 15a, the disassembly-prevention nut 30 is further screwed until screw loose is generated between surfaces of an inner screw thread of the disassembly-prevention nut 30 and the second thread portion 14a. At this time, it is difficult for the disassembly-prevention nut 30 to be screwed in or out by the tool, and the connection nut 20 cannot be further screwed in or out, thus further ensuring a non-detachably connection between the disassembly-prevention nut 30 and the pipe connector 10.

It could be understood that in other embodiments, the disassembly-prevention nut 30 may also be in other shapes, such as a pentagon-shaped nut, as long as the disassembly-prevention nut 30 can be easily connected to the pipe connector 10.

In an embodiment, hardness of the disassembly-prevention nut 30 is lower than hardness of the pipe connector 10 and the connection nut 20. In this way, upon a condition that screw loose is generated between the surfaces of the disassembly-prevention nut 30 and the pipe connector 10, an inner screw thread of the disassembly-prevention nut 30 are damaged, while neither the first thread portion 13 of the pipe connector 10 nor the connection nut 20 is damaged.

In an embodiment, in order to ensure threaded connection strength between the disassembly-prevention nut 30 and the pipe connector 10 smaller than threaded connection strength between the connection nut 20 and the pipe connector 10, a biting depth of a threaded connection between the connection nut 20 and the pipe connector 10 is deeper than a biting depth of a threaded connection between the disassembly-prevention nut 30 and the pipe connector 10. Therefore, a force of the pipe connector 10 screwed into the connection nut 20 is greater than a force of the disassembly-prevention nut 30 screwed into the connection nut 20. In some embodiments, a connection length between the connection nut 20 and the pipe connector 10 is longer than that between the disassembly-prevention nut 30 and the pipe connector 10. In this way, upon a condition that the disassembly-prevention nut 30 is tightly tightened and abuts against the limiting portion 15a, the connection between the connection nut 20 and the pipe connector 10 is tight, but screw loose is hardly generated between the connection nut 20 and the pipe connector 10.

In an embodiment, the inner screw thread disposed on an inner surface of the disassembly-prevention nut 30 extends to both ends of the disassembly-prevention nut 30, so that the connection strength between the disassembly-prevention nut 30 and the pipe connector 10 is greater.

In an embodiment, the inner screw thread disposed on the inner surface of the disassembly-prevention nut 30 extends to one end of the disassembly-prevention nut 30, so that the processing of the disassembly-prevention nut 30 is convenient and time-saving, and the processing cost is reduced.

A process of fixing the disassembly-prevention nut assembly 100 to the first connection pipe 201 or the second connection pipe 202 is shown hereinafter.

Referring to FIG. 10 to FIG. 12, during installation, firstly, an end of the first connection pipe 201 provided with the expansion portion 2011 is inserted into the connection nut 20, and extends from a first end of the connection nut 20. The connection nut 20 is screwed into the first thread portion 13 of the pipe connector 10 along the direction F2 with a wrench to fix the connection nut 20. Then the connection nut 20 is screwed and tightened, and the pipe connector 10 abuts against the expansion portion 2011 of the first connection pipe 201, so that a wall of the expansion portion 2011 is clamped between the pipe connector 10 and the connection nut 20. The disassembly-prevention nut 30 is screwed along the direction F1, and drives the pipe connector 10 to screw into the connection nut 20, so that the first connection pipe 201 is further compressed. After the first connection pipe 201 is compressed, the disassembly-prevention nut 30 is further screwed along a locking direction until the disassembly-prevention nut 30 abuts against the limiting portion 15a. At this time, since the threaded connection strength between the disassembly-prevention nut 30 and the pipe connector 10 is smaller than the threaded connection strength between the connection nut 20 and the pipe connector 10, screw loose is generated between the disassembly-prevention nut 30 and the pipe connector 10. That is, the inner thread of the disassembly-prevention nut 30 and the first thread portion 13 cannot be engaged. At this time, whether the disassembly-prevention nut 30 is screwed in or out of the pipe connector 10, the pipe connector 10 does not rotate. In addition, since the outer circumference of the pipe connector 10 is a smooth surface, it is impossible to rotate the pipe connector 10 by other tools and loosen the pipe connector 10. Therefore, the pipe connector 10 and the connection nut 20 can be non-detachably connected. The disassembly-prevention nut assembly 100 can be applied in an air conditioning system to prevent leakage of refrigerant from the indoor unit of the air conditioning system, thus avoiding the safety hazards caused by the air conditioning system.

In the disassembly-prevention nut assembly provided by the present invention, by mounting the disassembly-prevention nut on the connection nut or the pipe connector, the connection nut can be non-detachably connected to the pipe connector, so that the first connection pipe can be non-detachably connected to the second connection pipe.

The present invention further provides an air conditioning system (not shown). The air conditioning system includes the disassembly-prevention nut assembly as described above, and other necessary components connected to the disassembly-prevention nut assembly 100 of the air conditioning system, such as compressors, heat exchangers, pipes, etc., so that the air conditioning system can function properly.

The technical features of the above-described embodiments may be combined in any combination. For the sake of brevity of description, not all possible combinations of the technical features in the above embodiments are described.

## Claims

1. An air conditioning system, comprising a first connection pipe (201), a second connection pipe (202) and a disassembly-prevention nut assembly (100),
wherein the disassembly-prevention nut assembly (100) is configured for fixing a first connection pipe (201) and a second connection pipe (202), the disassembly-prevention nut assembly (100) comprises a pipe connector (10), a connection nut (20) and a disassembly-prevention nut (30),
a first end of the connection nut (20) is fixed to the first connection pipe (201), the pipe connector (10) is sleeved on and fixed to the second connection pipe (202), and
**characterized in that**, the pipe connector (10) extends in and is threadedly connected to a second end of the connection nut (20), the disassembly-prevention nut (30) is sleeved on the connection nut (20) and threadedly connected to the second end relatively away from the first connection pipe (201) of the connection nut (20).

2. The air conditioning system of claim 1, wherein an inner screw thread being capable of connecting with the pipe connector (10) is defined on an inner surface of the connection nut (20), and an outer screw thread being capable of connecting with the disassembly-prevention nut (30) is defined on an outer surface of the connection nut (20), and a spiral direction of the inner screw thread of the connection nut (20) is opposite to that of the outer screw thread of the connection nut (20).

3. The air conditioning system of claim 1, wherein a connection length between the disassembly-prevention nut (30) and the connection nut (20) is shorter than that between the connection nut (20) and the pipe connector (10).

4. The air conditioning system of claim 1, wherein an outer surface of the connection nut (20) comprises a thread portion and a smooth portion (22), and the disassembly-prevention nut (30) is threadly connected with a third thread portion, the pipe connector (10) comprises an assembling portion (11) having a non-circular-shaped outer surface, and the disassembly-prevention nut (30) is an outer hexagon-shaped nut.

5. The air conditioning system of any one of claims 1 to 4, wherein the first connection pipe (201) is connected to the pipe connector (10) by welding, and the second connection pipe (202) abuts against and is fixed in the connection nut (20) via the pipe connector (10).

## Patentansprüche

1. Eine Klimaanlage, die ein erstes Anschlussrohr (201), ein zweites Anschlussrohr (202) und eine Baugruppe (100) der Demontageverhinderungsmutter umfasst,
wobei die Baugruppe (100) der Demontageverhinderungsmutter zum Befestigen eines ersten Verbindungsrohrs (201) und eines zweiten Verbindungsrohrs (202) konfiguriert ist und die Baugruppe (100) der Demontageverhinderungsmutter einen Rohrverbinder (10), eine Verbindungsmutter (20) und eine Demontageverhinderungsmutter (30) umfasst,
ein erstes Ende der Anschlussmutter (20) an dem ersten Anschlussrohr (201) befestigt ist, der Rohrverbinder (10) auf das zweite Anschlussrohr (202) aufgesteckt und daran befestigt ist;
**dadurch gekennzeichnet, dass** sich der Rohrverbinder (10) in ein zweites Ende der Verbindungsmutter (20) erstreckt und mit diesem durch Gewinde verbunden ist, wobei die Demontageverhinderungsmutter (30) auf die Verbindungsmutter (20) aufgeschoben und mit dem zweiten Ende relativ entfernt vom ersten Verbindungsrohr (201) der Verbindungsmutter (20) durch Gewinde verbunden ist.

2. Klimaanlage nach Anspruch 1, wobei an einer Innenfläche der Verbindungsmutter (20) ein Innengewinde ausgebildet ist, das mit dem Rohrverbinder (10) verbunden werden kann, an einer Außenfläche der Verbindungsmutter (20) ein Außengewinde ausgebildet ist, das mit der Demontageverhinderungsmutter (30) verbunden werden kann, und eine Spiralrichtung des Innengewindes der Verbindungsmutter (20) entgegengesetzt zu der des Außengewindes der Verbindungsmutter (20) ist.

3. Klimaanlage nach Anspruch 1, wobei eine Verbindungslänge zwischen der Demontageverhinderungsmutter (30) und der Anschlussmutter (20) kürzer ist als die zwischen der Anschlussmutter (20) und dem Rohrverbinder (10).

4. Klimaanlage nach Anspruch 1, wobei eine Außenfläche der Verbindungsmutter (20) einen Gewindeabschnitt und einen glatten Abschnitt (22) aufweist, die Demontageverhinderungsmutter (30) mit einem dritten Gewindeabschnitt gewindemäßig verbunden ist, der Rohrverbinder (10) einen Montageabschnitt (11) mit einer nicht kreisförmigen Außenfläche aufweist und die Demontageverhinderungsmutter (30) eine äußere sechseckige Mutter ist.

5. Klimaanlage nach einem der Ansprüche 1 bis 4, wobei das erste Anschlussrohr (201) durch Schweißen mit dem Rohrverbinder (10) verbunden ist und das zweite Anschlussrohr (202) an der Anschlussmutter (20) anliegt und über den Rohrverbinder (10) in dieser befestigt ist.

## Revendications

1. Un système de climatisation, comprenant un premier tuyau de raccordement (201), un deuxième tuyau de raccordement (202) et un l'ensemble (100) d'écrou de prévention de démontage ,
dans lequel l'ensemble (100) d'écrou de prévention de démontage est configuré pour fixer premier tuyau de raccordement (201) et deuxième tuyau de raccordement (202), l'ensemble (100) d'écrou de prévention de démontage comprend un raccord de tuyau (10), un écrou de raccordement (20) et un écrou de prévention de démontage (30),
une première terminaison de l'écrou de raccordement (20) est fixée au premier tuyau de raccordement (201), le raccord de tuyau (10) est emmanché sur et fixé au deuxième tuyau de raccordement (202), et
**caractérisé en ce que**, le raccord de tuyau (10) se prolonge dans et est raccordé par filetage à une deuxième terminaison de l'écrou de raccordement (20), l'écrou de prévention de démontage (30) est emmanché sur l'écrou de raccordement (20) et est raccordé par filetage à la deuxième terminaison de l'écrou de raccordement (20) relativement distale du premier tuyau de raccordement (201).

2. Un système de climatisation selon la revendication 1, dans lequel un filetage de vis interne capable d'être raccordé au raccord de tuyau (10) est défini sur une surface interne de l'écrou de raccordement (20), et un filetage de vis externe capable d'être raccordé à l'écrou de prévention de démontage (30) est défini sur une surface externe de l'écrou de raccordement (20), et le sens spiralé du filetage de vis interne de l'écrou de raccordement (20) est opposé à celui du filetage de vis externe de l'écrou de raccordement (20).

3. Un système de climatisation selon la revendication 1, dans lequel la longueur de raccordement entre l'écrou de prévention de démontage (30) et l'écrou de raccordement (20) est plus courte que celle entre l'écrou de raccordement (20) et le raccord de tuyau (10).

4. Un système de climatisation selon la revendication 1, dans lequel une surface externe de l'écrou de raccordement (20) comprend une partie filetée et une partie lisse (22), et l'écrou de prévention de démontage (30) est raccordé par filetage à une troisième partie filetée, le raccord de tuyau (10) comprend une partie d'assemblage (11) munie d'une surface externe de forme non-circulaire, et l'écrou de prévention de démontage (30) est un écrou à forme externe hexagonale.

5. Un système de climatisation selon l'une quelconque des revendications 1 à 4, dans lequel le premier tuyau de raccordement (201) est raccordé au raccord de tuyau (10) par soudage, et le deuxième tuyau de raccordement (202) vient en butée contre et est fixé dans l'écrou de raccordement (20) via le raccord de tuyau (10).
